# EUROPÄISCHE PATENTANMELDUNG

(11) **EP 1 277 705 A1**
(43) Veröffentlichungstag der Anmeldung: **22.01.2003**
(21) Anmeldenummer: 02023874.7
(22) Anmeldetag: 26.10.1999
(51) Int. Cl.: C02F 3/12, C02F 1/44

(54) **Vorrichtung zur Reinigung und/oder Aufbereitung kommunaler und/oder industrieller Abwässer**

(62) Teilanmeldung aus: 99121288.7
(71) Anmelder: Rochem Ultrafiltrations Systeme Gesellschaft für Abwasserreinigung mbH, 20355 Hamburg (DE)
(72) Erfinder: Heine, Wilhelm, 21077 Hamburg (DE); Loettel, Wolfgang, Prof. Dr.-Ing., 06366 Köthen (DE); Günther, Ralph, Dr., 21244 Buchholz (DE)
(74) Vertreter: Niedmers, Ole, Dipl.-Phys.

(57) **Zusammenfassung**

Es wird ein Verfahren und eine Vorrichtung (10) zur Reinigung und/oder Aufbereitung kommunaler und/oder industrieller Abwässer (11) vorgeschlagen, insbesondere zum Einsatz in marinen Einrichtungen. Die Vorrichtung weist dabei eine biologisch betriebene Reaktionseinrichtung (12) auf, in der das zu reinigende und/oder aufzubereitende Abwasser (11) aufgenommen wird. In der Reaktionseinrichtung (12) ist Biomasse hoher Konzentration suspendiert. In diese Reaktionseinrichtung (12) wird das zu reinigende und/oder zu behandelnde Abwasser (11) gegeben. Nachfolgend wird das dort vorgereinigte bzw. vorbehandelte Abwasser auf eine Membrantrenneinrichtung (14) gegeben, in der es in ein Permeat (150) und ein Retentat (160) getrennt wird. Das Retentat (160) wird wenigstens teilweise in die Reaktionseinrichtung (12) zurückgeführt, wohingegen das Permeat (150) entweder als Brauch- oder Reinwasser abgeführt oder in das Reaktionssystem (12) zurückgeführt wird.

## Beschreibung

Die Erfindung betrifft ein Verfahren zur Reinigung und/oder Aufbereitung kommunaler und/oder industrieller Abwässer, insbesondere zum Einsatz in marinen Einrichtungen, sowie eine Vorrichtung, mit der ein derartiges Verfahren ausgeführt werden kann.

Abseits des flächendeckenden Einsatzes kommunaler Kläranlagen gibt es Abwasserströme kommunaler und/oder industrieller Art, die dezentral aufbereitet bzw. gereinigt werden müssen, bevor sie der Umwelt zugeführt werden können. Man unterscheidet grob drei typische Arten dezentraler Anlagen, mit denen Abwässer gereinigt bzw. aufbereitet werden können, und zwar solche, die beispielsweise in Gemeinden anzutreffen sind, die keinen Anschluß an kommunale Aufbereitungs- und Reinigungsanlagen haben (Fall 1). Die industrielle Abwasseraufbereitung für Problemstoffe, die aufgrund eines ungünstigen Verhältnisses Konzentrationen von CSB zu BSB₅ haben (Fall 2), die in herkömmlichen Reinigungs- bzw. Aufbereitungsanlagen nicht behandelt werden können.

Ein besonderes Problem stellt die Abwasseraufbereitung bzw. Reinigung auf marinen Einrichtungen, wie Schiffen (Fall 3) dar.

Insbesondere in den Fällen 1 und 3 müssen dabei Abwässer stark schwankender Zusammensetzung behandelt werden, was sowohl den Volumenstrom als auch die Zusammensetzung der Abwässer angeht. Bei Fall 3 muß zusätzlich den Gegebenheiten mariner Einrichtungen, beispielsweise Schiffen, Rechnung getragen werden.

Insbesondere beim Einsatz in marinen Einrichtungen, beispielsweise an Bord von Schiffen, sind in der Zwischenzeit aufgrund internationaler Vereinigungen wie der IMO (International Maritime Organisation) sehr rigide Vorschriften erlassen worden bezüglich der Einleitung von Schadstoffen von marinen Einrichtungen aus ins Meer. Die dort festgelegten Grenzwerte liegen teilweise erheblich niedriger als die zulässigen Grenzwerte, die bei Strömen gereinigten Abwassers aus ortsfesten Aufbereitungs- und Reinigungsanlagen an Land üblich sind. Da die Weltmeere zunehmend auch in sensiblen Gewässern, beispielsweise der Arktis und der Antarktis, sowohl von Forschungsschiffen als auch von Fischereischiffen und neuerdings auch von Passagierschiffen (Kreuzfahrtschiffen) befahren werden, sind zwischenzeitlich sehr rigide Vorschriften erlassen worden, um diesen Umständen Rechnung zu tragen.

Bisher wurde das auf marinen Einrichtungen anfallende Abwasser in Tanks gesammelt, d.h. zumindest beim Hafenaufenthalt und innerhalb der nationalen Gewässerzonen, und wurde dann nach ggf. unvollständiger oder nicht zuverlässiger Reinigung auf hoher See direkt ins Meer abgeleitet. Es fand faktisch keine Reinigung des Abwassers statt, vielmehr wurden sämtliche angefallenen Schadstoffe mit dem Trägerwasser in das Meer geleitet.

Dieses ist aus den vorgenannten Gründen äußerst nachteilig und wird in Zukunft auch nicht mehr zulässig sein. Andererseits stellt aber eine Abwasserreinigung bzw. Aufbereitung an Bord mariner Einrichtungen aufgrund der sehr begrenzten Platzverhältnisse hohe Anforderungen an einen sehr kompakten und kleinen Aufbau von Vorrichtungen bzw. Anlagen und es tritt ein weiteres erhebliches Problem auf, daß nämlich aufgrund der Krängungsbewegung und/oder Rollbewegung von Schiffen die Reinigung und Aufbereitung von Abwässern dennoch immer gewährleistet sein muß, d.h. ein Verfahren zur Reinigung und/oder Aufbereitung der Abwässer muß auch unter diesen Randbedingungen fortwährend uneingeschränkt funktionsfähig sein. Ein weiteres erschwerendes Moment der Möglichkeiten der Reinigung und/oder Aufbereitung von Abwässern, wie sie bei marinen Einrichtungen anfallen, ist darin begründet, daß die Abwasserströme beispielsweise an Bord von Schiffen in der Regel nicht getrennt werden, d.h. im Ergebnis eine Mischung kommunaler und technischer Abwässer vorliegt. Insbesondere durch die Einbringung technischer Lösungen (Fette, Reinigungsmittel, Tenside, Desinfektionsmittel usw.) steigt das Verhältnis von CSB/BSB₅ über das im normalen kommunalen Abwasser übliche Niveau an. Das Ansteigen kann zudem auch stoßartig erfolgen. Durch die niedrige Konzentration der Mikroorganismen, wie sie bei bisherigen konventionellen Reaktionssystemen mit maximalen Biomassekonzentrationen von 5g/l anzutreffen sind, kann diesen Schwankungen nicht Rechnung getragen werden und der Grad des biologischen Abbaus verringert sich stark.

Es ist deshalb Aufgabe der vorliegenden Erfindung, ein Verfahren und eine Vorrichtung der Eingangs genannten Art zu schaffen, mit denen Abwasserströme gereinigt und/oder aufbereitet werden können, die eine stark wechselnde hydraulische Belastung aufweisen, wie sie beispielsweise in marinen Einrichtungen, beispielsweise Schiffen, auftreten, wobei eine quasi kontinuierliche Reinigung und/oder Aufbereitung in einem quasi geschlossenen System erreicht werden kann und wobei das Verfahren und die Vorrichtung derart betreibbar sind, daß sie einen sehr geringen Betreuungs- und Wartungsaufwand aufweisen und wobei das Verfahren und die Vorrichtung einfach und kostengünstig durchführbar bzw. einfach und kostengünstig bereitstellbar sind.

Gelöst wird die Aufgabe gemäß dem Verfahren dadurch, daß das zu reinigende bzw. aufzubereitende Abwasser auf ein biologisches Reaktionssystem, in dem Biomasse hoher Konzentration suspendiert ist, gegeben wird, wobei das behandelte Abwasser nach der Behandlung im Reaktionssystem auf eine Nembrantrenneinrichtung gegeben wird, in der es in ein Permeat und ein Retentat getrennt wird, und wobei das Permeat entweder als Brauch- oder Reinwasser abgeführt oder wenigstens teilweise in das Reaktionssystem zurückgeführt wird.

Der Vorteil des erfindungsgemäßen Verfahrens liegt im wesentlichen darin, daß aufgrund der erfindungsgemäß möglichen hohen Biomassekonzentration das zu reinigende bzw. aufzubereitende Abwasser bereits am Ausgang des Reaktionssystems Ablaufkonzentrationen erreicht, die mit bisherigen konventionellen Systemen nicht erreichbar waren. Ein weiterer wesentlicher Vorteil der erfindungsgemäßen Lösung besteht darin, daß durch die nachgeschaltete Membrantrenneinrichtung in einem einstufigen Vorgang die Abtrennung des gereinigten Abwassers erfolgen kann und das gereinigte Abwasser bakterien- und virenfrei ist, wohingegen konventionelle Systeme nicht in der Lage sind, Viren oder Bakterien abzutrennen. Zudem ist von Vorteil, daß das Verfahren quasi kontinuierlich in einem quasi geschlossenen Kreislauf vonstatten gehen kann.

Gemäß einer vorteilhaften Ausgestaltung des Verfahrens wird das Retentat wenigstens teilweise in das Reaktionssystem zurückgeführt, beispielsweise dann, wenn in ausreichendem Maße Abwasser zur Reinigung und/oder Aufbereitung zugeführt wird.

Obwohl grundsätzlich eine breite Möglichkeit der Heranziehung unterschiedlicher biologischer Reaktionssysteme, die etwas unscharf auch Bioreaktoren genannt werden, möglich ist, ist es vorteilhaft, das Reaktionssystem gemäß der Erfindung nach dem Prinzip der Hochzelldichtefermentation zu betreiben, d.h. im Gegensatz zu konventionellen Systemen mit maximalen Biomassekonzentrationen von 5g/l das erfindungsgemäße System bei ca. 30g/l zu betreiben.

Vorteilhafterweise wird das zu reinigende bzw. aufzubereitende Abwasser vor Einführung in das Reaktionssystem vorfiltriert, d.h. es findet vorteilhafterweise eine in Teilbereichen vorgeschaltete mechanische Vorklärung des Abwassers statt, bevor es in das Reaktionssystem eingeführt wird. Dadurch wird die biologische Behandelbarkeit des Abwassers, befreit von teilchenförmigen Substraten, im Reaktionssystem durch die Mikroorganismen einfacher abbaubar sein.

Um den für den biologischen Abbau erforderlichen Sauerstoff bereitzustellen, wird Luft oder Sauerstoff in das Reaktionssystem eingetragen mit den Ziel, auch eine ideale Durchmischung des Abwassers im Reaktionssystem ohne zusätzliche Rührer oder sonstige mechanische Einrichtungen zu gewährleisten.

Da das im Reaktionssystem behandelte Abwasser, was auf die Membrantrenneinrichtung geführt werden soll, oft aufgrund der Temperatur des Zulaufs des Abwassers in das Reaktionssystem hinein eine unterschiedliche Temperatur aufweist, die Trennwirkung der Membrantrenneinrichtung und/oder die biologische Vorreinigung in der Reaktionseinrichtung jedoch bei bestimmten Temperaturen des darüber geleiteten bzw. eingebeteten Abwassers eine maximale Trennleistung zeigt, ist es vorteilhaft, das im Reaktionssystem behandelte Abwasser wenigstens vor Eintritt in die Membrantrenneinrichtung zu temperieren.

Um sicherzustellen, daß die Membrantrenneinrichtung für den Trennvorgang des Abwassers in ein Permeat und ein Retentat fortwährend einen gleichbleibenden, vorbestimmten Abwasserdruck der Eingangsseite der Membrantrenneinrichtung aufweist (Feeddruck), wird das im Reaktionssystem behandelte Abwasser vor Eintritt in die Membrantrenneinrichtung druckerhöht.

Die bzw. der in das Reaktionssystem eingeführte Luft bzw. Sauerstoff weist vorteilhafterweise einen Druck von 1 bis 1,2 bar auf, d.h. er kann atmosphärisch oder mit einem Überdruck von 0,2 bar über Atmosphärendruck betrieben werden. Auch andere Drücke des Reaktionssystems eingegebenen Sauerstoff können grundsätzlich gewählt werden.

Je nach Anfall der Menge des Abwassers kann vorteilhafterweise die Rückführung des Permeats dann erfolgen, wenn der Pegel des Abwassers (ursprüngliches Abwasser und Retentat) im Reaktionssystem eine festlegbare untere Grenze erreicht hat, und nach außen als Brauchwasser abgeführt wird, wenn der Pegel des Abwassers (ursprüngliches Abwasser, Retentat und Permeat) im Reaktionssystem eine obere Grenze erreicht hat. Diese Erfassung des oberen und unteren Pegels kann verfahrenstechnisch in vollem Umfang automatisiert betrieben werden, so daß ein manueller Eingriff bzw. eine manuelle Umschaltung dafür nicht erforderlich ist, die sich ggf. sogar als schädlich, weil unpräzise, für die quasi kontinuierliche Verfahrensführung herausstellen kann.

Um eine Spülung der Membrantrenneinrichtung zu vermeiden, die normalerweise bei solchen Verfahrensintervallen notwendig wäre, in denen kein in der Reaktionseinrichtung anfallendes vorgereinigtes bzw. vorbehandeltes Abwasser auf die Membrantrenneinrichtung gegeben wird, die Membrantrenneinrichtung somit quasi kontinuierlich zu betreiben, ist es vorteilhaft, wenigstens einen Teil des Retentats und/oder Permeats unter Druckerhöhung auf die Membrantrenneinrichtung nach Art eines Kreislaufs zurückzuführen. Damit ist auch im Langzeitbetrieb des Verfahrens eine Reinigung, die ggf. chemisch erfolgen müßte, der Membrantrenneinrichtung entbehrlich.

Eine Vorrichtung zur Reinigung und/oder Aufbereitung kommunaler und/oder industrieller Abwässer, insbesondere zum Einsatz in marinen Einrichtungen, umfaßt bisher im wesentlichen eine biologisch betriebene Reaktionseinrichtung zur Aufnahme des zu reinigenden und/oder aufzubereitenden Abwassers.

Als Lösung der obigen Aufgabe wird vorgeschlagen, eine Vorrichtung zu schaffen, bei der die Reaktionseinrichtung aus wenigstens einem Behälter besteht, der mit dem Eingang einer Membrantrenneinrichtung verbunden ist, wobei der Permeatausgang und/oder der Retentatausgang der Membrantrenneinrichtung wahlweise auf Eingänge der Reaktionseinrichtung umschaltbar sind.

Der Vorteil der erfindungsgemäßen Vorrichtung besteht im wesentlichen darin, daß mittels Umschaltmitteln, d.h. beispielsweise von Ventilen, die Vorrichtung auf einfache Weise auch dann quasi kontinuierlich betreibbar ist, wenn momentan kein Abwasser in die Vorrichtung bzw. in die Reaktionsvorrichtung geleitet wird. Zudem stellt die Membrantrenneinrichtung eine viren- und/oder bakteriendichte Trennung des Kreislaufsystems der Vorrichtung zu dem die Vorrichtung verlassenden Permeat, daß das gereinigte bzw. aufbereitete Abwasser darstellt, dar, so daß keine Bakterien und/oder Viren zerstörende Nachbehandlung des Permeats erforderlich ist.

Die Reaktionseinrichtung ist vorteilhafterweise als idealer Rührbehälter ohne Rührer betreibbar, denn mittels dem vorteilhaften Vorsehen einer Pumpe zum Eintrag von Luft/Sauerstoff in die Reaktionseinrichtung erfolgt eine ideale Durchmischung des Inhalts der Reaktionseinrichtung.

Vorzugsweise ist eine Filtereinrichtung vorgesehen, über die das zu reinigende bzw. aufzubereitende Abwasser der Reaktionseinrichtung zugeführt wird. Die Art der Vorfiltration hängt von den Gegebenheiten beim Einsatz der Vorrichtung insgesamt ab. Die Filtereinrichtung ist vorzugsweise in Form einer mechanischen Filtereinrichtung aufgebaut und weist eine Maschenweite im Bereich von 60 bis 400 µm auf. Die Flltereinrichtung kann als sogenannter rückspülbarer Filter ausgebildet sein.

In der Verbindungsleitung zwischen der Reaktionseinrichtung und dem Eingang der Membrantrenneinrichtung ist vorteilhafterweise ein Wärmetauscher vorgesehen, um sicherzustellen, daß das der Membrantrenneinrichtung zugeführte Abwasser auf der optimalen Temperatur gehalten wird, die für den optimalen Betrieb der Membrantrenneinrichtung und/oder der Reaktionseinrichtung bestimmend ist.

Der Wärmetauscher ist vorteilhafterweise wahlweise mit einem temperaturerhöhenden bzw. temperaturerniedrigenden Temperierungsmittel beaufschlagbar, beispielsweise einem über einen Durchlauferhitzer erwärmten flüssigen Medium zur Wärmeerhöhung bzw. einem flüssigen Kühlmedium, um die Temperatur zu erniedrigen.

Um sicherzustellen, daß der für die Funktion der Membrantrenneinrichtung nötige Druck des vorgereinigten Abwassers fortwährend gewährleistet ist, ist es vorteilhaft, in einer Verbindungsleitung zwischen der Reaktionseinrichtung und dem Eingang der Membrantrenneinrichtung wenigstens eine Pumpe vorzusehen, die darüberhinaus dann auch für wenigstens einen Teilstrom des in der Membraneinrichtung erzeugten Retentats zur erneuten Einspeisung in den Eingang der Membrantrenneinrichtung zur Druckerhöhung des Teilstroms herangezogen werden kann.

Die Reaktionseinrichtung besteht vorzugsweise aus einer Mehrzahl von Einzelbehältern, die jeweils für sich als vollfunktionsfähige Reaktionseinrichtungen betreibbar sind. Dieser modulare Aufbau gestattet eine gute überprüfbarkeit der Reaktionseinrichtungen und eine gute Möglichkeit der Wartung und des Austausches einzelner Behälter im Falle einer Funktionsunfähigkeit.

Die Einzelbehälter sind vorzugsweise parallelgeschaltet, sie werden jedoch als Gesamtreaktionseinrichtung betrieben.

Die Erfindung wird nun unter Bezugnahme auf die nachfolgende einzige schematische Zeichnung anhand eines Ausführungsbeispiels im Einzelnen beschrieben. Diese zeigt:
In Form eines Blockschaltbildes eine Vorrichtung zur Reinigung und/oder Aufbereitung kommunaler und/oder industrieller Abwässer, mit der auch ein Verfahren gemäß der Erfindung betrieben werden kann.

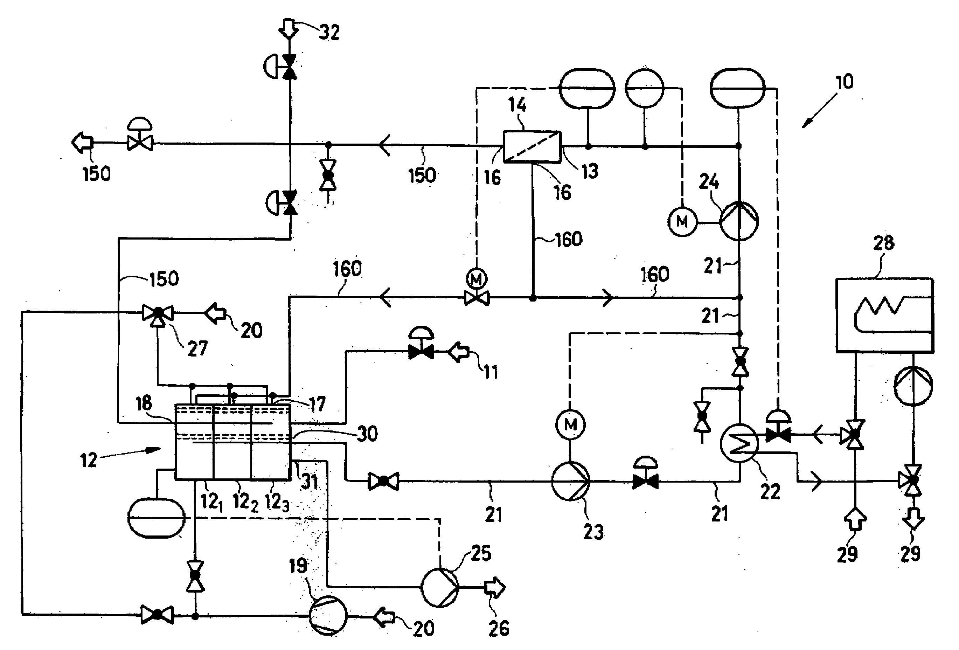

Es wird zunächst Bezug genommen auf die einzige Figur, die in Form eines Blockschaltbildes eine Vorrichtung 10 zeigt, mit der eine Reinigung und/oder Aufbereitung kommunaler und/oder industrieller Abwässer 11 möglich ist und die nach dem hier beschriebenen Verfahren betrieben werden kann. Die Vorrichtung 10 weist eine Reaktionsvorrichtung 12 auf, die aus einer Mehrzahl von Behältern 12₁, 12₂, 12₃ besteht. Die Behälter 12₁, 12₂ und 12₃ bilden in ihrer Gesamtheit die Reaktionsvorrichtung 12 und sind funktionsmäßig parallelgeschaltet. Es sei darauf hingewiesen, daß hier die in der Figur beispielhaft dargestellte Zahl von 3 Behältern nicht bestimmend für die Größe der Reaktionseinrichtung 12 ist. Vielmehr kann die Anzahl der Behälter je nach Aufgabe der mit der Vorrichtung 10 zu bewerkstelligenden Reinigungs- bzw. Aufbereitungsleistung variieren.

Die funktionsfähig miteinander verbundenen Einzelbehälter 12₁, 12₂ und 12₃ sind über eine Verbindungsleitung 21 mit dem Eingang 13 einer Membrantrenneinrichtung 14 verbunden. In diese Verbindungsleitung 21 sind zwei Pumpen 23, 24 in Reihe geschaltet, wobei zwischen den beiden Pumpen 23, 24 in die Verbindungsleitung zusätzlich noch ein Wärmetauscher 22 geschaltet ist. Alternativ oder zusätzlich kann ein Wärmetauscher 22 auch in die Verbindungsleitung zwischen der Pumpe 24 und der Membrantrenneinrichtung 14 geschaltet werden. Der Retentatausgang 16 der Membrantrenneinrichtung 14 ist einerseits mit dem Eingang der Pumpe 24 verbunden und andererseits mit dem Eingang 17 der Reaktionseinrichtung 12. Das am Retentatausgang 16 austretende Retentat kann somit in zwei Teilströme aufgeteilt, d.h. einerseits in die Reaktionseinrichtung 12 zurückgeführt werden und andererseits wieder auf die Saugseite der Pumpe 24. Der Permeatausgang 15 stellt das gereinigte und/oder aufbereitete Abwasser als Permeat 150 bereit, das die Vorrichtung 10 entweder als Brauchwasser oder als an die Umwelt abzugebendes Abwasser verläßt, oder aber das Permeat 150 wird auf einen weiteren Eingang 18 der Reaktionseinrichtung 12 in die Reaktionseinrichtung 12 zurückgeführt.

Luft oder Sauerstoff 20 wird über eine Pumpe 19, die die Funktion eines Gebläses hat, in die Reaktionseinrichtung 12 geführt. Zusätzlich kann Luft oder Sauerstoff auch über geeignete Umschaltung eines Dreiwegeventils 27 entweder von oben, von unten oder aus beiden Richtungen in die Reaktionseinrichtung 12 eingeführt werden. Als Luft- oder Sauerstoffeintragorgan fungieren sogenannte Gas-Flüssigkeitsverdichter, die beispielsweise auch hydraulisch über das Druckinventar des Retentats 160 der Membrantrenneinrichtung 14 angetrieben werden können. Das Abwasser 11, das mittels der Vorrichtung 10 gereinigt und/oder aufbereitet werden soll, wird über eine hier nicht gesondert dargestellte Filtereinrichtung, die beispielsweise in Form eines rückspülbaren mechanischen Filters mit einer Maschenweite zwischen 60 und 400 µm ausgebildet sein kann, geführt. Der in die Verbindungsleitung 21 eingeschaltete, schon erwähnte Wärmetauscher 22 wird entweder über eine ein wärmeabgebendes Medium erzeugende Einrichtung, beispielsweise in Form eines Durchlauferhitzers 28, geführt oder mit einer hier nicht dargestellten Einrichtung verbunden, die ein Kühlmedium erzeugt. Je nach der Temperatur des aus der Reaktionseinrichtung über die Pumpe 23 über den Wärmetauscher 22 geförderten vorgereinigten bzw. voraufbereiteten Abwassers wird das zur Membrantrenneinrichtung 14 an deren Eingang 13 geförderte Abwasser derart temperiert, daß eine optimale, konstante Temperatur gesichert wird. Die Temperatursteuerung kann automatisch durch Temperaturerfassung in der Verbindungsleitung 21 geregelt werden. Ebenso kann anstelle des Durchlauferhitzers 28 an Bord mariner Einrichtungen vorhandenes flüssiges und/oder gasförmiges Medium als Primärmedium im Wärmetauscher verwendet werden.

Die Reaktionseinrichtung 12 ist über einen weiteren Ausgang 31, über den Biomasse 26 aus der Reaktionseinrichtung 12 entfernt werden kann, mit einer Pumpe 25 verbunden, mittels der die Biomasse 26 zu einer hier nicht gesondert dargestellten Deponieeinrichtung bzw. zu einer hier nicht im einzelnen dargestellten anderweitigen Verwertung zugeführt werden kann.

Die Membrantrenneinrichtung 14 arbeitet nach dem Ultrafiltrationsprinzip mit einem Molekulargewichts-Cut Off zwischen 50.000 und 200.000 g/mol. Dadurch ist eine vollständige Rückhaltung von Mikroorganismen, Bakterien, Viren und suspendierten Inhaltsstoffen gewährleistet, d.h. diese sind im aus der Membrantrenneinrichtung 14 austretenden Permeat 150 (Brauchwasser) nicht enthalten. Durch diese Membranbarriere kann die Biomassekonzentration in der Reaktionseinrichtung 12 auf einem deutlich höheren Niveau als bisher bekannte Anlagen angehoben betrieben werden. Um auch bei hohen Biomassenkonzentrationen einen stabllen Betrieb der Membrantrenneinrichtung 14 ohne chemische Reinigung zu gewährleisten, kann in regelmäßigen Abständen mit Druckluft 32 von der Permeatseite her zurückgespült werden.

Der Verfahrensablauf zur Reinigung und/oder Aufbereitung kommunaler und/oder industrieller Abwässer 11 erfolgt folgendermaßen. Zunächst wird die Reaktionseinrichtung 12 mit Biomasse hoher Konzentration, in Wasser suspendiert, geladen. Alternativ kann auch mit einer sogenannten Startkultur mit einer Biomassenkonzentration von 1 bis 2 g/l in der Reaktionseinrichtung 12 begonnen werden, die dann auf die gewünschte Konzentration gesteigert wird. Die Biomassekonzentration beträgt beispielsweise, unabhängig davon, welcher der vorbeschriebenen Wege gewählt wird, für den weiteren Verfahrensablauf ca. 30 g/l. Nachfolgend wird das zu behandelnde Abwasser 11 nach entsprechender Vorreinigung über mechanische Filter in die Reaktionseinrichtung 12 gegeben. Ober die Pumpe 19 und/oder das Dreiwegeventil 27 wird Luft oder Sauerstoff 20 in die Reaktionseinrichtung 12 gegeben. In der Reaktionseinrichtung 12 erfolgt aufgrund der biochemischen Reaktionen eine Reinigung des darin enthaltenen Abwassers, bis es Ablaufkonzentration erreicht. Dieses vorgereinigte bzw. vorbehandelte Abwasser verläßt die Reaktionseinrichtung 12 an deren Ausgang 30 und wird über eine Verbindungsleitung 21 auf die Pumpe 23 geleitet, die das vorgereinigte bzw. behandelte Abwasser über den Wärmetauscher 22 zur Pumpe 24 fördert. Im Wärmetauscher 22 wird das vorgereinigte bzw. vorbehandelte Abwasser auf eine geeignete Temperatur temperiert, die optimal für den Trennvorgang in der Membrantrenneinrichtung 14 ist, auf deren Eingang 13 die Pumpe 24 das optimal temperierte vorgereinigte bzw. vorbehandelte Abwasser fördert. Die Pumpe 23 stellt den nötigen Betriebsdruck für die Funktion der Membrantrenneinrichtung 14 her. Die Pumpe 24 dient im wesentlichen der Geschwindigkeitserhöhung bzw. der Beschleunigung des auf die Membrantrenneinrichtung 14 geleiteten vorgereinigten bzw. vorbehandelten Abwassers.

In der Membrantrenneinrichtung 14 wird das vorbehandelte bzw. vorgereinigte und temperierte Abwasser in ein Permeat 150 und ein Retentat 160 auf an sich bekannte Weise getrennt. Das Retentat 160 verläßt die Membrantrenneinrichtung 14 und wird wenigstens teilweise in die Reaktionseinrichtung 12 zurückgeführt.

Bei bestimmten Betriebszuständen der Vorrichtung 10 bzw. des Verfahrens, bei denen kein Abwasser 11 zur Reaktionseinrichtung geführt wird, wird ein Teil des Retentats 160 auf die Eingangsseite der Pumpe 24 zurückgeführt, um die Membrantrenneinrichtung 14 auch bei diesem Betriebszustand quasi kontinuierlich zu betreiben und somit eine dauernde Funktionsfähigkeit der Membrantrenneinrichtung 14 zu gewährleisten.

Das Permeat 150 verläßt die Vorrichtung 10 entweder als Brauch- oder Reinwasser oder wird, falls kein Abwasser 11 zur Reaktionseinrichtung 12 geführt wird, in die Reaktionseinrichtung 12 zurückgeführt.

Das Verfahren arbeitet quasi kontinuierlich, selbst wenn in bestimmten Zeiträumen kein Abwasser 11 anfällt, das in die Reaktionseinrichtung 12 geführt werden kann. Die Rückführung des Permeats 150 in die Reaktionseinrichtung 12 erfolgt durch geeignete Steuerung des Verfahrens dann, wenn der Pegel des Abwassers 11 (ursprüngliches Abwasser 11 und Retentat 160) in der Reaktionseinrichtung 12 eine festlegbare untere Grenze erreicht hat, und das Permeat 150 wird nach außen abgeführt, wenn der Pegel des Abwassers 11 (ursprüngliches Abwasser 11, Retentat 160 und Permeat 150) im Reaktionsgefäß eine obere Grenze erreicht hat.

Der Betrieb der Pumpe 23 erfolgt kontinuierlich, d.h. das vorgereinigte bzw. voraufbereitete Abwasser wird zur Membrantrenneinrichtung 14 bzw. zu der in der Verbindungsleitung 21 vorgeschalteten Pumpe 24 gefördert. Es sei noch darauf hingewiesen, daß der biologische Abbau der Inhaltsstoffe des Abwassers 11 in der Reaktionseinrichtung 12 zu einem Wachstum der darin suspendierten Mikroorganismen führt (Anstieg des TS-Gehaltes im System) und zu einer Aufzehrung des Sauerstoffs im Abwasser 11 in der Reaktionseinrichtung 12. Beide Größen können durch geeignete Detektoren erfaßt werden und können neben regelungstechnischen Aufgaben zur Steuerung der Vorrichtung 10 auch als Indikatoren für die Funktion des erfindungsgemäßen Verfahrens dienen. Die schon erwähnte Pumpe 25 gewährleistet in Kombination mit der Funktion der Membrantrenneinrichtung 14 eine stabile Biomassenkonzentration in der Reaktionseinrichtung 12. Bei Überschreiten einer vorgegebenen Konzentration der Biomasse (Trockensubstanz = TS) in der Reaktionseinrichtung 12 kann beispielsweise zwischen 2 und 5 % vom Abwasserzulauf als überschußschlamm angepumpt werden. Bei Unterschreiten eines vorgegebenen TS-Gehaltes kann die Pumpe 25, gesteuert durch automatische Erfassung des TS-Gehaltes, abgeschaltet werden.

### Bezugszeichenliste

- 10: Vorrichtung
- 11: Abwasser
- 12: Reaktionseinrichtung/Reaktlonssystem
- 13: Eingang (Membrantrenneinrichtung)
- 14: Membrantrenneinrichtung
- 15: Permeatausgang
- 150: Permeat
- 16: Retentatausgang
- 160: Retentat
- 17: Eingang (Reaktionseinrichtung)
- 18: Eingang (Reaktionseinrichtung)
- 19: Pumpe (Sauerstoffeintrag)
- 20: Sauerstoff/Luft
- 21: Verbindungsleitung
- 22: Wärmetauscher
- 23: Pumpe
- 24: Pumpe
- 25: Pumpe (Biomasse)
- 26: Biomasse
- 27: Dreiwegeventil
- 28: Durchlauferhitzer
- 29: Kühlmedium
- 30: Ausgang (vorgereinigtes/vorbehandeltes Abwasser)
- 31: Ausgang (Biomasse)
- 32: Druckluft

## Patentansprüche

1. Vorrichtung zur Reinigung und/oder Aufbereitung kommunaler und/oder industrieller Abwässer, insbesondere zum Einsatz in marinen Einrichtungen, umfassend eine biologisch betriebene Reaktionseinrichtung zur Aufnahme, Reinigung und/oder Aufbereitung des Abwassers, **dadurch gekennzeichnet, daß** die Reaktionseinrichtung (12) aus wenigstens einem Behälter besteht, der mit dem Eingang (13) einer Membrantrenneinrichtung (14) verbunden ist, wobei der Permeatausgang (15) und/oder der Retentatausgang (16) der Membrantrenneinrichtung (14) wahlweise auf Eingänge (17, 18) der Reaktionseinrichtung (12) umschaltbar ist bzw. sind.

2. Vorrichtung nach Anspruch 1, **dadurch gekennzeichnet, daß** die Reaktionseinrichtung (12) als idealer Rührbehälter ohne Rührer betreibbar ist.

3. Vorrichtung nach einem oder beiden der Ansprüche 1 oder 2, **dadurch gekennzeichnet, daß** das zu reinigende bzw. aufzubereitende Abwasser (11) über eine Filtereinrichtung der Reaktionseinrichtung (12) zuführbar ist.

4. Vorrichtung nach Anspruch 3, **dadurch gekennzeichnet, daß** die Filtereinrichtung eine mechanische Filtereinrichtung mit einer Maschenweite im Bereich zwischen 60 bis 400 µm ist.

5. Vorrichtung nach einem oder mehreren der Ansprüche 1 bis 4, **dadurch gekennzeichnet, daß** eine Pumpe (19) zum Eintrag von Luft oder Sauerstoff (20) in die Reaktionseinrichtung (12) vorgesehen ist.

6. Vorrichtung nach einem oder mehreren der Ansprüche 1 bis 4, **dadurch gekennzeichnet, daß** in eine Verbindungsleitung (21) zwischen der Reaktionseinrichtung (12) und dem Eingang (13) der Membrantrenneinrichtung (14) ein Wärmetauscher (22) vorgesehen ist.

7. Vorrichtung nach Anspruch 6, **dadurch gekennzeichnet, daß** der Wärmetauscher (22) wahlweise mit einem temperaturerhöhenden bzw. temperaturerniedrigenden Temperierungsmittel beaufschlagbar ist.

8. Vorrichtung nach einem der Ansprüche 1 bis 7, **dadurch gekennzeichnet, daß** in einer Verbindungsleitung (21) zwischen der Reaktionseinrichtung (12) und dem Eingang (13) der Membrantrenneinrichtung (14) wenigstens eine Pumpe (23; 24) vorgesehen ist.

9. Vorrichtung nach einem oder mehreren der Ansprüche 1 bis 8, **dadurch gekennzeichnet, daß** die Reaktionseinrichtung (12) aus einer Mehrzahl von Einzelbehältern (12₁, 12₂, 12₃) besteht, die jeweils für sich als vollfunktionsfähige Reaktionseinrichtungen betreibbar sind.

10. Vorrichtung nach Anspruch 9, **dadurch gekennzeichnet, daß** die Einzelbehälter (12₁, 12₂, 12₃) parallelgeschaltet sind.
